# EUROPÄISCHE PATENTSCHRIFT

(11) **EP 0 452 554 B1**
(45) Veröffentlichungstag und Bekanntmachung des Hinweises auf die Patenterteilung: **20.03.1996**
(21) Anmeldenummer: 90124079.6
(22) Anmeldetag: 13.12.1990
(51) Int. Cl.: H04N 5/95

(54) **Vorrichtung zur Eingabe von Videosignalen in einen Bildspeicher**
Device for input of video signals into a memory
Dispositif pour l'inscription de signaux vidéo dans une mémoire vidéo

(30) Priorität: 14.04.1990 DE 4012205
(43) Veröffentlichungstag der Anmeldung: 23.10.1991
(73) Patentinhaber: GRUNDIG E.M.V. Elektro-Mechanische Versuchsanstalt Max Grundig GmbH & Co. KG, D-90762 Fürth (DE)
(72) Erfinder: Mahmud, Shabaz, Grundig E.M.V., Max Grundig, W-8510 Fuerth (DE)

(56) Entgegenhaltungen:
- EP-A- 0 142 613
- EP-A- 0 283 263
- GB-A- 2 087 193
- US-A- 4 959 825

## Beschreibung

Die Erfindung betrifft eine Vorrichtung zur Verarbeitung von Videosignalen in Verarbeitungseinheiten mit Bildspeicher gemäß dem Oberbegriff des Anspruchs 1.

Bei der Verarbeitung von Videosignalen ergeben sich bei verschiedenen Signalquellen Schwankungen im Signalfluß, die beispielsweise bei Videorecordern ihre Ursache in Bandlaufschwankungen haben. Bei der digitalen Verarbeitung von Videosignalen wird der Abtasttakt für die Analog-Digital-Wandler aus diesen Videoquellen abgeleitet und unterliegt somit ebenfalls Schwankungen.

Um den Aufbau von Bildspeichern in Videogeräten möglichst einfach gestalten zu können, werden die Speicherbereiche mit einem festen Quarztakt versorgt. Zwischen dem Analog-Digital-Wandler und dem Bildspeicher ist ein Pufferspeicher angeordnet, dessen Einschreibtakt aus dem Videosignal abgeleitet wird und dessen Auslesetakt der feste Quarztakt ist.

Ein solches Signalverarbeitungssystem für Videosignale ist in der europäischen Offenlegungsschrift EP-A-0 283 263 beschrieben.

Dieses Signalverarbeitungssystem beinhaltet einen Analog-Digital-Wandler zur Digitalisierung des Videosignals. Das digitalisierte Videosignal durchläuft einen Pufferspeicher und einen Seriell-Parallel-Wandler und wird dann in den Bildspeicher eingeschrieben. Aus dem analogen Videosignal werden die Synchronisationssignale abgetrennt und daraus das Taktsignal abgeleitet, mit den der Analog-Digital-Wandler versorgt wird. Weiterhin erfolgt der Einschreibvorgang in den Pufferspeicher mit diesem Takt.

In einem Taktfrequenzgenerator werden die Taktsignale erzeugt, mit denen die Signale aus dem Pufferspeicher ausgelesen werden und mit dem die Seriell-Parallel-Wandlung erfolgt. In diesem Taktfrequenzgenerator werden ebenfalls die Taktsignale erzeugt, mit denen aus dem Seriell-Parallel-Wandler ausgelesen und in den Bildspeicher eingeschrieben wird.

Mit derartigen Anordnungen wird nach dem bekannten Stand der Technik in Videogeräten eine Zeitfehlerkorrektur durchgeführt, indem mit dem zeitlich schwankenden Eingangstakt in den Pufferspeicher eingeschrieben wird und mit einem quarzstabilen Takt aus diesem wieder ausgelesen wird.

Um eine fehlerfreie Ablage eines zeitfehlerbehafteten Videosignals in einen Bildspeicher, d.h. eine definierte Zuordnung des Bildinhaltes zum Speicherbereich, zu erhalten ist es notwendig, die Datenübergabe vom Analog-Digital-Wandler zum Pufferspeicher und anschließend zum Bildspeicher zu steuern.

Es ist daher Aufgabe der Erfindung eine Anordnung anzugeben, die den Datenfluß so steuert, daß eine fehlerfreie Ablage des Bildinhaltes in den Bildspeicher gewährleistet ist.

Diese Aufgabe wird gemäß Anspruch 1 gelöst, indem die Datenübernahme in den Pufferspeicher sowie die Datenausgabe aus dem Pufferspeicher durch eine Steuervorrichtung überwacht und gesteuert wird.

Der Pufferspeicher in Verbindung mit der Steuervorrichtung ist die Schnittstelle zwischen dem Analog-Digital-Wandler und dem Bildspeicher, wobei anstelle des analog-digital-gewandelten Videosignals ein extern erzeugtes, zeitfehlerbehaftetes Signal in den Pufferspeicher gelegt werden kann.

In dieser Schnittstelle werden die für den Bildspeicher bestimmten Daten vorformatiert, so daß ein gegenüber dem Takt des Festfrequenzgenerators, mit dem die Daten in den Bildspeicher geschrieben werden, langsamerer oder schnellerer Takt, mit dem das analoge Videosignal in ein digitales Signal gewandelt wird, ohne Datenverlust ausgeglichen wird.

Ist der Datenfluß des Analog-Digital-Wandlers langsamer als der Einschreibvorgang in den Bildspeicher, dann wird dieser Einschreibvorgang gestoppt, bis ein Datenblock vollständig im Pufferspeicher vorhanden ist und vollständig in den Bildspeicher übernommen werden kann.

Für den Fall, daß der Datenfluß des Analog-Digital-Wandlers schneller ist als der Einschreibvorgang in den Bildspeicher, werden die überzähligen Daten vom Pufferspeicher aufgenommen, bis sie in den Bildspeicher eingeschrieben werden können.

Die Steuervorrichtung besteht aus einem Eingabezähler, einem Ausgabezähler und einem Adreßkomparator.

Der Eingabezähler dient als Speicherzähler für den Pufferspeicher und zählt in Abhängigkeit vom Datenfluß im Analog-Digital-Wandler weiter. Der Ausgabezähler dient ebenfalls als Speicherzähler für den Pufferspeicher und zählt in Abhängigkeit vom Datenfluß aus dem Pufferspeicher in den Bildspeicher weiter.

Im Adreßkomparator werden jeweils die Werte des Ein- und Ausgabezählers verglichen und in Abhängigkeit vom Vergleichsergebnis erfolgt die Steuerung der Datenübergabe bzw. -übernahme zum und vom Pufferspeicher.

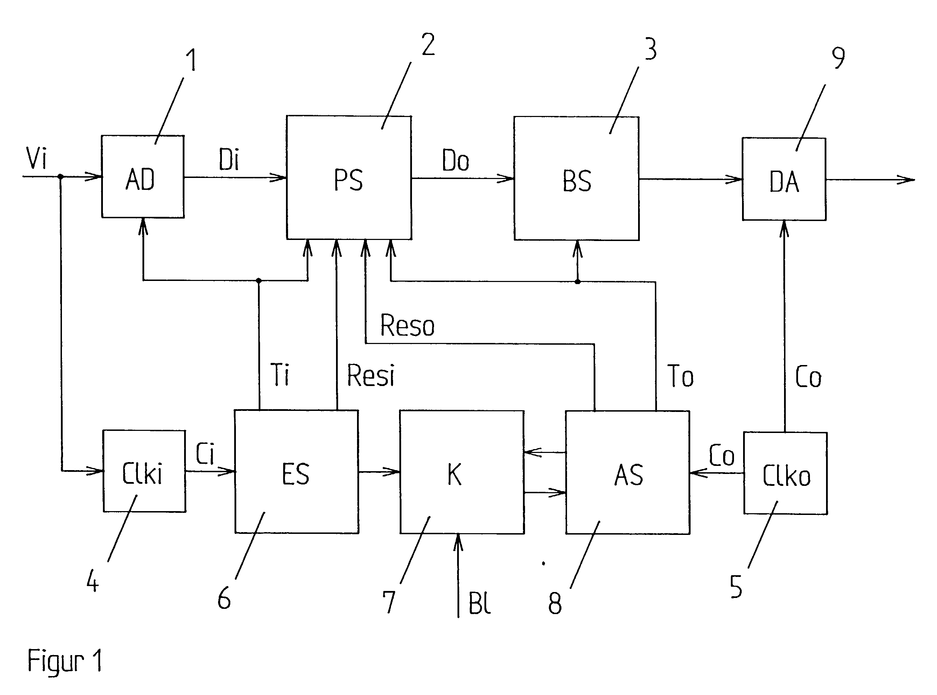

Eine ausführliche Beschreibung der Erfindung erfolgt mit Hilfe der Figur 1, die ein Blockschaltbild mit der erfindungsgemäßen Anordnung zeigt. In diesem Blockschaltbild sind nur die zum Verständnis der Erfindung notwendigen Blöcke und Verbindungsleitungen eingezeichnet.

Im Eingabetaktgenerator 4 wird aus dem Videosignal Vi ein Taktsignal Ci erzeugt, das an die Eingabesteuerung 6 gelegt wird. Von dieser Eingabesteuerung 6 führen ein Steuersignal Resi an den Pufferspeicher 2 und ein Taktsignal Ti an den Analog-Digital-Wandler 1 und ebenfalls an den Pufferspeicher 2. Die Ausgabesteuerung 8 und der Digital-Analog-Wandler 9 erhalten ein Taktsignal Co von einem Takterzeuger 5 und die Ausgabesteuerung 8 gibt ein Taktsignal To an den Pufferspeicher 2 und den Bildspeicher 3. Das Steuersignal Reso führt von der Ausgabesteuerung 8 an den Pufferspeicher 2. Der Adreßkomperator 7 ist über eine Datenleitung und eine Steuerleitung mit der Ausgabesteuerung 8 verbunden und mit einer Datenleitung mit der Eingabesteuerung 6. Weiterhin erhält er ein Signal Bl, mit dem die Blocklänge der Datenblöcke und somit die zu vergleichenden Stellen der Adressen festgelegt werden.

Der Pufferspeicher 2 hat zusammen mit der Steuerlogik 6, 7 und 8 die Funktion einer Schnittstelle zwischen dem Analog-Digital-Wandler 1 und dem Bildspeicher 3. Im Bildspeicher 3 werden unter einer Adresse beispielsweise 8 Datenworte abgelegt. Im Pufferspeicher 2 werden dann jeweils 8 Datenworte zu einem Datenblock zusammengefaßt, wobei der Pufferspeicher 2 eine Speichertiefe von 4 Datenblöcken, d.h. 32 Datenworten hat. Bei einer derartigen Dimensionierung ist es bei den üblichen zeitlichen Schwankungen im Datenfluß gewährleistet, daß im Pufferspeicher genügend Datenworte zwischengespeichert sind, wenn der Datenfluß im Analog-Digital-Wandler langsamer ist als der Datenfluß in den Bildspeicher, und daß genügend Datenworte zwischengespeichert werden können, wenn der Datenfluß im Analog-Digital-Wandler schneller ist als der Datenfluß in den Bildspeicher.

Der Datenfluß im Analog-Digital-Wandler 1 und bei der Übernahme in den Pufferspeicher 2 wird durch das in der Eingabesteuerung 6 erzeugte Taktsignal Ti festgelegt, wobei das Taktsignal Ti in Abhängigkeit von Eingabetaktgenerator 4, der aus den Synchronimpulsen des Videosignals ein Taktsignal Ci erzeugt, welches mit Schwankungen behaftet ist, gebildet wird.

Im Ausgabetaktgenerator 5 wird ein Taktsignal Co erzeugt, an dem wiederum in der Ausgabesteuerung 8 das Taktsignal To gebildet wird, mit dem die Übernahme der Daten Do vom Pufferspeicher 2 in den Bildspeicher 3 getaktet wird.

Im folgenden wird die Funktion der Steuerlogik 6, 7 und 8 dargelegt.

Die Eingabesteuerung 6 besteht aus einem Zähler und einer Steuereinheit. Der Zähler dient als Speicherzähler für den Pufferspeicher und wird mit dem Takt Ci gezählt. Die Zählerweite entspricht der Speichertiefe des Pufferspeichers, der in vorteilhafter Weise nach dem FIFO-Prinzip (first in - first out) arbeitet.

Bei einer Speichertiefe von 32 Datenworten zählt dieser Zähler also von 0 bis 31. Ist der Zählerstand 31 erreicht, wird von der Steuereinheit der Eingabesteuerung 6 ein Reset-Impuls erzeugt und der Einschreibvorgang beginnt wieder bei der Adresse 0 des Pufferspeichers 3.

Der Start der Eingabesteuerung 6 erfolgt nach Auftreten eines V- und eines H-Impulses in Folge.

Die Eingabe wird gestoppt, wenn ein H- oder V-Impuls auftritt, wobei die einzelnen Datenblöcke entweder voll oder leer sein müssen, d.h. im Pufferspeicher 2 müssen sich n° 8 Bytes befinden, wobei bei einer Speichertiefe von 32 Bytes n = 1, 2, 3 oder 4 ist.

Die Ausgabesteuerung 8 besteht in Übereinstimmung mit der zur Eingabesteuerung 6 aus einem Zähler und einer Steuereinheit. Die Ausgabesteuerung 8 wird mit dem Takt Co getaktet.

Die Ausgabesteuerung 8 wird gestartet, wenn sich mindestens 8 Datenworte im Pufferspeicher befinden. Ein Stoppsignal wird ausgegeben, wenn gerade 8 Datenworte, d.h. ein Datenblock aus dem Pufferspeicher 2 in den Bildspeicher 3 gegeben wurde, und wenn die Ein- und Ausgabeadressen, d.h. die Zählerstände der Ein- und Ausgabezähler gleich sind. Der Vergleich der Adressen findet im Komparator 7 statt.

In der Ausgabesteuerung 8 wird bei jedem Datenblock, der vom Pufferspeicher 2 in den Bildspeicher 3 gesendet wurde, ein Steuerbit gesetzt, mit dem die Datenausgabe aus dem Pufferspeicher blockiert wird. Bei Aufnahme des Datenblocks in den Bildspeicher wird dieses Steuerbit rückgesetzt.

Am Ende einer Fernsehzeile, d.h. wenn ein H-Impuls beginnt, werden alle Daten die im Puffer abgelegt sind, an den Bildspeicher 3 übertragen. Der Ausgabezähler erreicht so den Wert des Eingabezählers und die Ausgabesteuerung wird gestoppt.

## Patentansprüche

1. Vorrichtung zur Verarbeitung von Videosignalen, die einen Analog-Digital-Wandler (1), einen Pufferspeicher (2) und einen Bildspeicher (3) enthält, wobei das Taktsignal für die Analog-Digital-Wandlung und für den Einschreibvorgang in den Pufferspeicher (2) aus dem zu verarbeitenden Videosignal (Vi) abgeleitet wird und das Taktsignal für den Auslesevorgang aus dem Pufferspeicher (2) und den Einschreibevorgang in den Bildspeicher (3) durch einen Festfrequenzgenerator erzeugt wird,
**gekennzeichnet durch**
- eine Eingabevorrichtung (6) zur Steuerung des Einschreibvorganges in den Pufferspeicher (2), die einen Zähler beinhaltet, der mit dem aus dem Videosignal (Vi) abgeleiteten Taktsignal getaktet wird, wobei die Zählweite des Zählers der Anzahl der Datenworte entspricht, die in den Pufferspeicher (2) eingeschrieben werden können,
- eine Ausgabevorrichtung (8) zur Steuerung des Auslesevorganges aus dem Pufferspeicher (2) in den Bildspeicher (3), die einen Zähler beinhaltet, der mit einem Quarztakt vom Fertfrequenzgenerator getaktet wird, und dessen Zählweite der Anzahl der Datenworte entspricht, die in den pufferspeicher (2) eingeschrieben werden können,
- einen Komparator (7), der beide Zählerstände vergleicht und bei Gleichheit der Zählerstände die Datenausgabe aus dem Pufferspeicher (2) stoppt.

2. Vorrichtung nach Anspruch 1, **dadurch gekennzeichnet** , daß die Ein- und Ausgabevorrichtungen (6, 8) so ausgeführt sind, daß deren Zähler bei Erreichen der höchsten Zählerstände rückgesetzt werden.

3. Vorrichtung nach Anspruch 1 oder 2, **dadurch gekennzeichnet**, daß die Eingabevorrichtung (6) so ausgeführt ist, daß der Zähler gestartet wird, wenn ein Horizontalimpuls einem Vertikalimpuls folgt.

4. Vorrichtung nach einem oder mehreren der Ansprüche 1 bis 3, **dadurch gekennzeichnet**, daß die Eingabevorrichtung (6) so ausgeführt ist, daß die Dateneingabe in den Pufferspeicher (2) gestoppt wird, wenn ein Horizontal- oder ein Vertikalimpuls auftritt.

## Claims

1. Device for processing video signals which contains an analog/digital converter (1), a buffer store (2) and a frame store (3), the clock signal for the analog/digital conversion and for the operation of writing into the buffer store (2) being derived from the video signal (Vi) to be processed and the clock signal for the operation of reading out of the buffer store (2) and for the operation of writing into the frame store (3) being generated by a fixed frequency generator,
characterized by
- an input device (6) for controlling the operation of writing into the buffer store (2), which contains a counter which is clocked with a clock signal derived from the video signal (Vi), the count range of the counter corresponding to the number of data words which can be written into the buffer store (2),
- an output device (8) for controlling the operation of reading out of the buffer store (2) into the frame store (3), which output device (8) comprises a counter which is clocked with a quartz-crystal clock from the fixed frequency generator and whose count range corresponds to the number of data words which can be written into the buffer store (2),
- a comparator (7) which compares the two counter readings and if the counter readings are equal, stops the data output from the buffer store (2).

2. Device according to Claim 1, characterized in that the input and output devices (6, 8) are designed in such a way that their counters are reset when the highest counter readings are reached.

3. Device according to Claim 1 or 2, characterized in that the input device (6) is designed in such a way that the counter is started if a horizontal pulse follows a field pulse.

4. Device according to one or more of Claims 1 to 3, characterized in that the input device (6) is designed in such a way that the data input into the buffer store (2) is stopped when a horizontal or a field pulse occurs.

## Revendications

1. Dispositif pour traiter des signaux vidéo, qui contient un convertisseur analogique/numérique (1), une mémoire tampon (2) et une mémoire d'images (3), et dans lequel le signal de cadence pour la conversion analogique/ numérique et pour l'opération d'enregistrement dans la mémoire tampon (2) est dérivé du signal vidéo (Vi) devant être traité, et le signal de cadence pour l'opération de lecture à partir de la mémoire tampon (2) et pour l'opération d'enregistrement dans la mémoire tampon (3) est produit par un générateur de fréquence fixe,
caractérisé par
- un dispositif d'entrée (6) pour commander l'opération d'enregistrement dans la mémoire tampon (2) et qui contient un compteur, qui est commandé de façon cadencée par le signal de cadence dérivé du signal vidéo (Vi), la capacité de comptage du compteur correspondant au nombre des mots de données, qui peuvent être enregistrés dans la mémoire tampon (2),
- un dispositif de sortie (8) servant à commander l'opération de lecture depuis la mémoire tampon (2) dans la mémoire d'images (3) et qui contient un compteur, qui est commandé de façon cadencée par une cadence délivrée par le quartz du générateur de fréquence fixe, et dont la capacité de comptage correspond au nombre des mots de données, qui peuvent être enregistrés dans la mémoire tampon (2),
- un comparateur (7), qui compare les deux états de comptage et, en cas d'égalité des états de comptage, arrête la délivrance de données à partir de la mémoire tampon (2).

2. Dispositif selon la revendication 1, caractérisé en ce que les dispositifs d'entrée et de sortie (6,8) sont agencés de telle sorte que leurs compteurs sont ramenés à zéro lorsque les états de comptage maximum sont atteints.

3. Dispositif selon la revendication 1 ou 2, caractérisé en ce que le dispositif d'entrée (6) est agencé de telle sorte que le compteur démarre lorsqu'une impulsion horizontale suit une impulsion verticale.

4. Dispositif selon une ou plusieurs des revendications 1 à 3, caractérisé en ce que le dispositif d'entrée (6) est agencé de telle sorte que l'entrée de données dans la mémoire tampon (2) est arrêtée lorsqu'une impulsion horizontale ou une impulsion verticale apparaît.
